(19) Europäisches Patentamt
European Patent Office
Office européen des brevets

(11) Veröffentlichungsnummer: **0 523 510 A2**

(12) # EUROPÄISCHE PATENTANMELDUNG

(21) Anmeldenummer: **92111452.6**

(51) Int. Cl.$^5$: **B01D 71/56**, B01D 67/00

(22) Anmeldetag: **06.07.92**

(30) Priorität: **17.07.91 DE 4123602**

(43) Veröffentlichungstag der Anmeldung:
**20.01.93 Patentblatt 93/03**

(84) Benannte Vertragsstaaten:
**DE FR GB IT SE**

(71) Anmelder: **BAYER AG**

**W-5090 Leverkusen 1 Bayerwerk(DE)**

(72) Erfinder: **Brandt, Heinz-Dieter, Dr.**
**Buschstrasse 169**
**W-4150 Krefeld(DE)**
Erfinder: **Dhein, Rolf, Dr.**
**Deswatinesstrasse 30**
**W-4150 Krefeld(DE)**
Erfinder: **Hildenbrand, Karlheinz, Dr.**
**Gatzenstrasse 147**
**W-4150 Krefeld(DE)**
Erfinder: **Hugl, Herbert, Dr.**
**Gemarkenweg 9**
**W-5060 Bergisch Gladbach 2(DE)**
Erfinder: **Wolf, Gerhard-Dieter, Dr.**
**Wilhelm-Busch-Strasse 29**
**W-4047 Dormagen 5(DE)**

(54) **Membranen aus aromatisch-heterocyclischen Polyamiden, Verfahren zu ihrer Herstellung und ihre Verwendung.**

(57) Semipermeable Membranen, bestehend aus einem aromatischheterocyclischen Polyamid der Formel

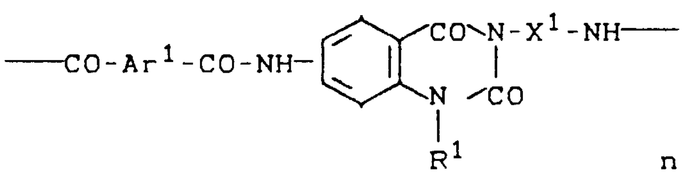

(I),

in der
$X^1$, $Ar^1$, $R^1$ und n die in der Beschreibung angegebene Bedeutung haben,
sind hervorragend geeignet für die Ultrafiltration und für verschiedene Verfahren der Blutwäsche.

EP 0 523 510 A2

Die Erfindung bezieht sich auf eine permselektive, in bevorzugter Weise asymmetrische Membran auf Basis von aromatisch-heterocyclischen Polyamiden die insbesondere für die Ultrafiltration, die Hämodialyse, die Hämodiafiltration und die Hämofiltration geeignet sind, auf ein Verfahren zur Herstellung solcher Membranen und auf die genannte Verwendung.

Hämodialyse, Hämodiafiltration und Hämofiltration sind bekannte Verfahren zur Entgiftung des Blutes (Blutwäsche), d.h. zur Entfernung von selbst in geringer Konzentration vorhandenen toxischen Metaboliten und überschüssigem Wasser. Bei diesen Verfahren wird das Blut aus einer Ader des Patienten durch eine künstliche Niere geleitet, in der das Blut an einer semipermeablen Membran entlangfließt. Auf der anderen Seite der Membran befindet sich eine entsprechend zusammengesetzte Spülflüssigkeit, in die die Giftstoffe durch die semipermeable Membran hineinwandern. Das gereinigte Blut wird dem Körper des Patienten wieder zugeführt.

Bei der Hämodialyse vollzieht sich der Transport über einen Lösungsvorgang in der Membran, dem sich ein Diffusionsschritt anschließt, während eine Hämofiltrationsmembran eine Porenmembran ist, deren Porendurchmesser die Molekulargewichtsausschlußgrenze bestimmt. Bei der Hämodiafiltration vollzieht sich der Transport, wie der Name dieses Vorgangs sagt, nach beiden genannten Prinzipien, also sowohl der Trennung über Lösungs-Diffusions-Mechanismen als auch über den Membranporendurchmesser.

Für diese Verfahren sind eine ganze Reihe von Polymeren vorgeschlagen worden, beispielsweise Celluloseacetat (NTIS Report PB 225 069), Polyacrylnitril (DE-AS 21 45 183), Polysulfon (DE-AS 22 28 537), aromatisches Polyamid oder Polyimid (DE-AS 23 42 072), Diisocyanat-Additionspolymere (DE-PS 33 41 847) und Polyamid-Mischungen (EP 305 787). Die in den genannten Veröffentlichungen beschriebenen Membranen haben alle infolge ihres chemischen Aufbaus und ihrer architektonischen Struktur spezifische Nachteile, wie mangelnde Festigkeit, mangelnde Hämokompatibilität, zu hohe bzw. zu niedrige Wasseraufnahme, mangelnde thermische Beständigkeit (wichtig bei der Sterilisation mit Heißdampf), wasserlösliche bzw. blutlösliche, schädliche Additive, mangelnde Fehlstellenfreiheit, wie Stippen, Gelkörper u.ä., die nach der Fällung Löcher in der Membran hervorrufen, mangelnde chemische Beständigkeit bzw. die unerwünschte Notwendigkeit, daß zur Erreichung von akzeptablen dialytischen Permeabilitäten mit hydrophilen Polymeren verschnitten/legiert werden muß.

Hieraus resultiert die grundlegende Forderung, für die Blutwäsche stets neue Membranen zu entwickeln, die dem Patienten den größtmöglichen Komfort bei geringstem Risiko und geringster Belastung während der Behandlung bieten.

Es wurde nun gefunden, daß sich aus aromatisch-heterocyclischen Polyamiden Membranen herstellen lassen, deren Leistungsdaten sie für eine Anwendung bei Blutreinigungsverfahren in hohem Maße geeignet machen.

Die Erfindung betrifft demnach semipermeable Membranen, bestehend aus einem aromatisch-heterocyclischen Polyamid der Formel

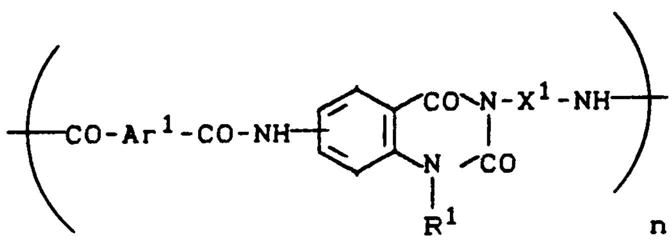 (I),

in der

$X^1$ und $Ar^1$ unabhängig voneinander bivalente aromatische Reste sind, die aus einem oder mehreren kondensierten aromatischen Ringen oder aus mehreren aromatischen Ringen, die über eine Einfachbindung oder über eine $-CH_2-$, $-C(CH_3)_2-$, -O-, -S-, $-SO_2-$ oder -CO-Gruppe miteinander verbunden sind, bestehen, wobei die aromatischen Ringe 1- bis 3-fach durch $C_1$-$C_4$-Alkyl, Halogen oder $C_1$-$C_4$-Alkyl und Halogen substituiert sein können,

$R^1$ für Wasserstoff, geradkettiges oder verzweigtes $C_1$-$C_8$-Alkyl, $C_3$-$C_8$-Cycloalkyl, $C_6$-$C_{12}$-Aryl oder $C_7$-$C_{10}$-Aralkyl steht und

n ein Zahlenmittel von 25 bis 250 bedeutet.

Geradkettiges oder verzweigtes $C_1$-$C_8$-Alkyl ist beispielsweise Methyl, Ethyl, Propyl, Isopropyl, Butyl, Isobutyl, die isomeren Hexyle oder Octyle; bevorzugtes Alkyl hat 1-4 C-Atome und ist besonders bevorzugt Methyl oder Ethyl.

$C_3$-$C_8$-Cycloalkyl ist beispielsweise Cyclopropyl, Methyl-cyclopropyl, Dimethyl-cyclopropyl, Cyclobutyl, Cyclopentyl, Methyl-cyclopentyl, Cyclohexyl, Methyl-cyclohexyl, Dimethyl-cyclohexyl, Cycloheptyl, Cyclooctyl; bevorzugtes Cycloalkyl ist Cyclopropyl, Cyclopentyl und Cyclohexyl.

$C_6$-$C_{12}$-Aryl ist Phenyl, Naphthyl oder Biphenylyl, bevorzugt Phenyl.

$C_7$-$C_{10}$-Aralkyl ist beispielsweise Benzyl, methylsubstituiertes Benzyl, Phenylethyl, Phenylpropyl oder Phenylbutyl, bevorzugt Benzyl.

Halogen ist beispielsweise Fluor, Chlor oder Brom, bevorzugt Fluor oder Chlor.

Ein bivalenter aromatischer Rest ist Phenylen oder in der angegebenen Weise 1- bis 3-fach substituiertes Phenylen. Aromatische Reste aus mehreren kondensierten aromatischen Ringen sind beispielsweise Naphthylen, Anthrylen oder Phenanthrylen. Bivalente aromatische Reste können ferner aus mehreren aromatischen Ringen bestehen, die über eine Einfachbindung oder über eine der genannten Gruppen miteinander verbunden sind. Solche bivalente aromatische Reste können 2, 3 oder mehr Benzolringe enthalten; in bevorzugter Weise enthalten sie 2 oder 3 Benzolringe, in besonders bevorzugter Weise 2 Benzolringe. Beispiele für solche zuletztgenannten bivalenten aromatischen Reste sind:

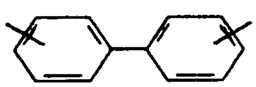 , 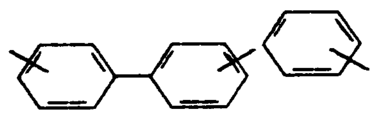 ,

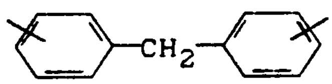 , 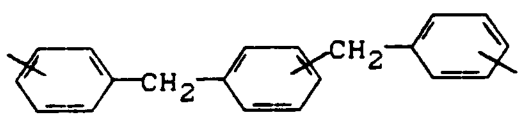 ,

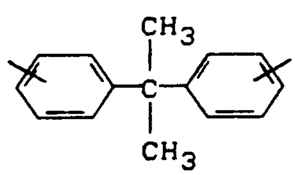 , 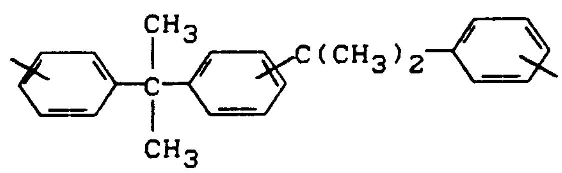 ,

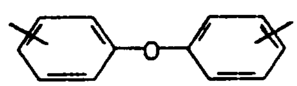 , 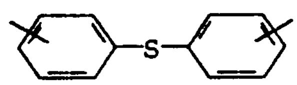 ,

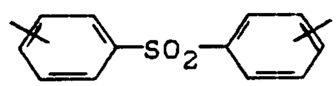 , 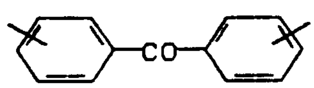 .

Alle bivalenten aromatischen Reste können 1- bis 3-fach durch Alkyl, Halogen oder Alkyl und Halogen gemeinsam substituiert sein, wie dies oben für Phenylen beschrieben wurde.

Aromatisch-heterocyclische Polyamide der genannten Art sind an sich bekannt (BE 718 033; DE-OS 17 20 686), Membranen für die obigen Verwendungszwecke aus diesen Polymeren sind jedoch neu.

In bevorzugten erfindungsgemäßen Membranen ist $Ar^1$ durch $Ar^2$ mit der Bedeutung

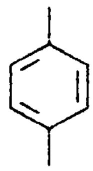, 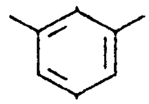, 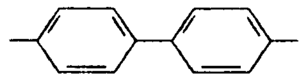,

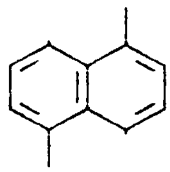 oder 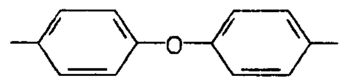

ersetzt.

In besonders bevorzugten erfindungsgemäßen Membranen ist $Ar^1$ durch $Ar^3$ mit der Bedeutung

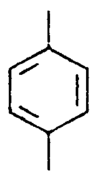 oder 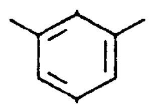

ersetzt.

In weiteren bevorzugten erfindungsgemäßen Membranen ist $X^1$ durch $X^2$ mit der Bedeutung

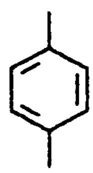, 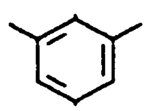, 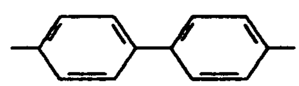,

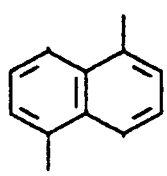 oder 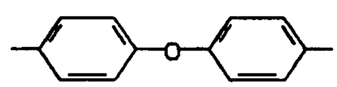

ersetzt.

In weiteren besonders bevorzugten erfindungsgemäßen Membranen ist $X^1$ durch $X^3$

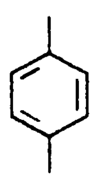 oder 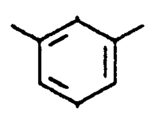

ersetzt.

In weiteren bevorzugten erfindungsgemäßen Verfahren ist $R^1$ durch $R^2$ mit der Bedeutung Wasserstoff, geradkettiges oder verzweigtes $C_1$-$C_4$-Alkyl, Cyclopropyl, Cyclopentyl, Cyclohexyl, Phenyl oder Benzyl

ersetzt. In weiteren besonders bevorzugten erfindungsgemäßen Membranen ist $R^1$ durch $R^3$ mit der Bedeutung Wasserstoff, Methyl, Ethyl oder Benzyl ersetzt.

In den Polyamiden für die erfindungsgemäßen Membranen bedeutet der Index n das Zahlenmittel des Polymerisationsgrades, welches im Bereich von 25 bis 250, bevorzugt von 35 bis 150 liegt.

Die erfindungsgemäßen Membranen haben eine mikroporöse Struktur und in bevorzugter Weise einen zusätzlich asymmetrischen Aufbau.

Die Herstellung der Polyamide für die erfindungsgemäßen Membranen erfolgt in bekannter Weise vorzugsweise durch Lösungskondensation eines Diamins der Struktur

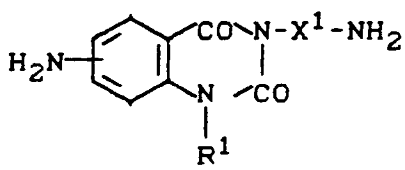

(II)

mit einem Disäuredichlorid der Formel

$Cl\text{-}CO\text{-}Ar^1\text{-}CO\text{-}Cl$ (III),

worin

$X^1$, $Ar^1$ und $R^1$ den obigen Bedeutungsumfang haben.

Die Lösungskondensation erfolgt gemäß BE 718 033 in Lösungsmitteln, wie N-Methyl-pyrrolidon (NMP), Dimethylformamid (DMF), Dimethylacetamid (DMAC) oder Dimethylsulfoxid (DMSO). Der Polykondensatgehalt der Reaktionslösung wird so eingestellt, daß er 5-25 Gew.-% beträgt. Eine solche Reaktionslösung ist für die Herstellung der Membranen direkt geeignet. Die Herstellung der erfindungsgemäßen Membranen erfolgt sodann in bekannter Weise nach dem Phaseninversionsverfahren (vgl. Robert E.

Kesting "Synthetic Polymeric Membranes", 2nd Edition, 1985, S. 237 ff.). Anstelle der mit der Herstellungslösung identischen Gießlösung kann man auch das Polyamid aus der Herstellungslösung durch geeignete Verfahren, beispielsweise durch Fällen mit einem Nichtlösungsmittel, wie Wasser oder Alkoholen, isolieren und dann durch Wiederauflösen, vorzugsweise in NMP, DMF, DMAC oder DMSO eine Gießlösung herstellen. Hierbei kann gemäß Stand der Technik unter Zusatz von Lösungsvermittlern, wie Lithiumchlorid, Calciumchlorid usw. oder unter Zusatz von geeigneten Porenbildnern gearbeitet werden (R.E. Kesting, loc. cit.). Auch bei dieser Verfahrensweise wird der Gehalt der Gießlösung auf 5-25 Gew.-% Polyamid eingestellt; die Viskosität solcher Gießlösungen beträgt 2000-25000 Centipoise (gemessen mit einem Brookfield-Viskosimeter).

Eine solche Gießlösung in einem aprotischen, polaren Lösungsmittel, bevorzugt von der beispielhaft genannten Art, wird auf eine ebenmäßige Unterlage zu einem Film ausgebreitet oder wird zu Hohlfäden, Schläuchen oder Kapillaren verarbeitet. Auf den Film oder den Hohlfaden, Schlauch oder die Kapillare läßt man sodann im Sinne des Phaseninversionsverfahrens ein Hilfslösungsmittel (Fällungsmittel) einwirken, das mit dem aprotischen, polaren Lösungsmittel mischbar ist, aber kein Lösungsmittel für das Polyamid darstellt. Dieses Hilfslösungsmittel entzieht dem Film, dem Hohlfaden, Schlauch oder der Kapillare das aprotische polare Lösungsmittel und fällt somit das Polyamid in Form der erfindungsgemäßen Membran aus. Ein solches Hilfslösungsmittel (Fällungsmittel) kann beispielsweise Wasser oder ein niederer Alkohol sein. Zur restlosen Entfernung des aprotischen polaren Lösungsmittels können sich weitere Waschschritte anschließen. Danach kann, sofern es die vorgesehene Verwendung erforderlich macht, die gebildete Membran nach bekannten Verfahren durch Trocknung vom Hilfslösungsmittel (Fällungsmittel) bzw. von der Waschflüssigkeit befreit werden. Vor dieser Trocknung ist es vorteilhaft, die Membran mit einem Weichmacher, beispielsweise mit Glycerin zu behandeln.

Die Ausbreitung einer Lösung des aromatisch-heterocyclischen Polyamids auf einer ebenmäßigen Unterlage zu einem Film ist beispielsweise durch die bekannte Gießtechnik zur Herstellung von Filmen und Folien möglich. Hohlfäden, Schläuche oder Kapillaren lassen sich beispielsweise durch einen zweckmäßig ausgebildeten formgebenden Ringspalt bzw. eine Hohlnadel ausbilden und vorzugsweise direkt in das Hilfslösungsmittel (Fällungsmittel) einspinnen. In beiden Fällen, nämlich bei der Filmbildung oder bei der Bildung von Hohlfäden, Schläuchen oder Kapillaren können die Versuchsbedingungen so gewählt werden, daß das Hilfslösungsmittel (Fällungsmittel) von einer oder von beiden Oberflächenseiten an die Membran herantreten kann. Hierbei bildet sich in entsprechender Weise auf einer oder auf beiden Seiten eine dichte Haut auf der Membran.

Die asymmetrische Struktur, die ein bevorzugtes Merkmal der erfindungsgemäßen Membranen ist, wird hierbei während der Fällung in einer dem Fachmann bekannten Weise erreicht.

Erfindungsgemäße Membranen weisen eine Ultrafiltrationsrate von 0,5-450 ml pro Stunde, pro $m^2$ und pro mbar Differenzdruck und eine dialytische Permeabilität für Chlorid von 1-20 • $10^{-4}$ cm/s auf.

Während Polyamidmembranen der bekannten Art zur Erreichung der benötigten dialytischen Permeabilität einen Zusatz von hydrophilen Polymeren, beispielsweise von Polyvinylpyrrolidon oder Polyvinylalkohol erfordern, ist dies überraschenderweise bei den erfindungsgemäßen Membranen nicht nötig. Die genannten Zusätze hydrophiler Polymerer in bekannten Polyamidmembranen unterliegen stets der Gefahr der Auswaschung, da diese Polymere wasser- bzw. blutlöslich sind Damit können solche Membranbestandteile von bekannten Membranen in das Blut gelangen und den Patienten belasten. Diese Gefahr besteht bei den erfindungsgemäßen Membranen nicht, die dennoch Membranen mit hervorragenden dialytischen Permeabilitäten darstellen.

Es ist weiterhin vorteilhaft, daß die Ultrafiltrationsraten und die dialytischen Permeabilitäten sich durch die Variation von Parametern bei der Herstellung der erfindungsgemäßen Membranen dem gewünschten Niveau anpassen lassen. Diese zu variierenden Parameter sind beispielsweise die Konzentration des Polymer in der Gießlösung, die Wahl des Lösungsmittels, die durch die Gießtechnik erzielte Membranschichtdicke und die Abfolge der Entfernung des aprotischen polaren Lösungsmittels, bei der vor der Anwendung des Hilfslösungsmittels ein Teil des aprotischen, polaren Lösungsmittels abgedampft werden kann.

Wenngleich es für spezielle Zwecke (beispielsweise für die Ultrafiltration außerhalb der Blutwäsche) möglich ist, auch Lösungsvermittler gemäß dem Stand der Technik (beispielsweise Lithiumchlorid oder Calciumchlorid) einzusetzen, ist es grundsätzlich nicht erforderlich, solche Lösungsvermittler bei der Herstellung der erfindungsgemäßen Membranen einzusetzen. Dies ist bei allen Verfahren der Blutwäsche wiederum vorteilhaft, da solche Lösungsvermittler nur sehr schwer restlos zu entfernen sind und damit wieder durch Auswaschung ein Risiko für den Dialysepatienten darstellen.

## Beispiele

Die Ultrafiltrationsrate der Membranen wird bestimmt durch Messung des Flüssigkeitsvolumens, das bei gegebener Druckdifferenz bei einer Temperatur von 37°C durch eine mit der Apparatur festgelegte Membranfläche durch die Membran hindurchtritt und das zur allgemeinen Vergleichbarkeit auf Flächeneinheit, Zeiteinheit und Druckeinheit normiert wird. Als Flüssigkeit zur Bestimmung der Ultrafiltrationsrate wird Wasser verwendet. Die Methode ist u.a. beschrieben in "Evaluation of Haemodialyzers and Dialysis Membranes" des U.S. Department of Health, Education and Welfare, DHEW Publication No. (NIH) 77-1294, S. 24-26.

Als Testsubstanz für die Urämiegifte dient Natriumchlorid. Gemessen wird die diffuse, drucklose Konzentrationsänderung zweier unterschiedlich konzentrierter Ausgangslösungen zu beiden Seiten der Membran mit der Zeit mittels einer Kaufmann-Leonhard-Zelle. Die $Cl^{\ominus}$-Konzentration in beiden Zellen kann leicht über Leitfähigkeitsmessungen ermittelt werden.

## Herstellung des aromatisch-heterocyclischen Polyamids:

134 g 3-p-Aminophenoxy-7-amino-2,4-chinazolindion wurden in 700 g absolutem NMP gelöst. Bei 0-10°C wurden unter stetigem Rühren in kleinen Portionen 101,5 g Isophthalsäuredichlorid zugegeben. Nach beendeter Zugabe wurde die klare, hochviskose Lösung bei Raumtemperatur 20 Stunden lang nachgerührt. Durch Zugabe von NMP wurde während dieser Zeit weiter verdünnt, bis die Polyamidkonzentration der Lösung 18 % betrug. Die relative Viskosität gemessen an einer 0,5 %igen Lösung des Polymeren in DMF bei 20°C in einem Ubbelohde-Viskosimeter betrug $\eta$rel = 2.105.

## Gießlösung:

Als Gießlösung wurde entweder direkt die Reaktionslösung, die nach der oben beschriebenen Herstellvorschrift anfällt, verwendet (Gießlösung A), oder das Polymer wurde aus der Reaktionslösung mit $H_2O$ gefällt, getrocknet und in dem entsprechenden Lösungsmittel in einer Konzentration von 10 % aufgelöst (Gießlösung B).

Gießlösungen A und B wurden vor Verwendung über eine Satz Filterschicht Supra 100 filtriert und anschließend entgast.

Herstellung der Membran:

Die Gießlösung wurde mittels eines Rakels auf einer Glasplatte zu einem Film entsprechender Dicke verzogen. Anschließend wurde die beschichtete Glasplatte senkrecht in ein Fällbad mit $H_2O$ einer Temperatur von 25 ° C als Fällmittel langsam hineingestellt. Nach ca. 15 min. löste sich die Membran von dem Glas ab, anschließend wurde diese auf die Ultrafiltrationsrate (UF-Wert) und die dialytische Chloridpermeabilität untersucht (Tabelle 1).

**Tabelle 1**

(Beispiele 1 bis 13): UF-Werte und Chloridpermeabilitäten verschiedener Membranen

| Beispiel | Gießlösung/ lösungsmittel* | Schichtdicke (naß) [µm] | UF-Wert [ml/h x $m^2$ x mbar] | Cl-Permeabilität [cm/s $10^{-4}$] |
|---|---|---|---|---|
| 1 | A | 200 | 20,3 | 3,9 |
| 2 | A | 150 | 24,4 | 7,5 |
| 3 | B/NMP | 50 | 261 | 12,2 |
| 4 | B/NMP | 100 | 156,8 | 9,5 |
| 5 | B/NMP | 150 | 84,0 | 8,1 |
| 6 | B/NMP | 250 | 78,6 | 5,4 |
| 7 | B/DMF | 150 | 418,0 | 11,0 |
| 8 | B/DMSO | 150 | 421,5 | 7,6 |
| 9 | B/NMP | 150 | 72,8 | 8,3 |
| 10 | B/DMF | 150 | 30,8 | 8,6 |
| 11 | B/DMF | 150 | 252,8 | 8,5 |
| 12 | B/DMF | 150 | 216,0 | 8,7 |
| 13 | B/DMF | 150 | 141,1 | 8,9 |

* NMP = N-Methyl-pyrrolidon
DMF = Dimethylformamid;
DMSO = Dimethylsulfoxid

Beispiele 1 bis 8 geben die Konzentrations-, Schichtdicken- und Lösungsmittelabhängigkeit von UF-Wert und Cl-Permeabilität wieder.

Bei den Beispielen 9 bis 13 wurde die beschichtete Glasplatte vor der Fällung nach unterschiedlichen Zeiten bei unterschiedlichen Temperaturen in einem Trockenschrank getempert und anschließend sofort gefällt.

| Beispiel | Temperaturbedingungen |
|---|---|
| 9 | 10 min, 80 °C |
| 10 | 2 min, 60 °C |
| 11 | 1 min, 70 °C |
| 12 | 1 min, 80 °C |
| 13 | 1 min, 90 °C |

Beispiele 9 bis 13 zeigen, daß bei annähernd konstanten Permeabilitäten der UF-Wert durch Temperung verkleinert werden kann.

**Patentansprüche**

**1.** Semipermeable Membranen, bestehend aus einem aromatisch-heterocyclischen Polyamid der Formel

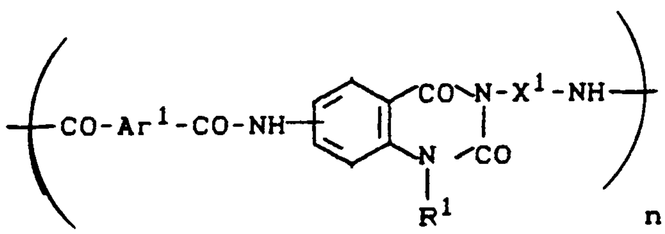

,

in der

| | |
|---|---|
| $X^1$ und $Ar^1$ | unabhängig voneinander bivalente aromatische Reste sind, die aus einem oder mehreren kondensierten aromatischen Ringen oder aus mehreren aromatischen Ringen, die über eine Einfachbindung oder über eine $-CH_2-$, $-C(CH_3)_2-$, -O-, -S-, $-SO_2-$ oder -CO-Gruppe miteinander verbunden sind, bestehen, wobei die aromatischen Ringe 1- bis 3-fach durch $C_1$-$C_4$-Alkyl, Halogen oder $C_1$-$C_4$-Alkyl und Halogen substituiert sein können, |
| $R^1$ | für Wasserstoff, geradkettiges oder verzweigtes $C_1$-$C_8$-Alkyl, $C_3$-$C_8$-Cycloalkyl, $C_6$-$C_{12}$-Aryl oder $C_7$-$C_{10}$-Aralkyl steht und |
| n | ein Zahlenmittel von 25 bis 250 bedeutet. |

**2.** Membranen nach Anspruch 1, bei denen $Ar^1$ durch $Ar^2$ mit der Bedeutung

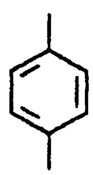 , 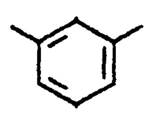 , 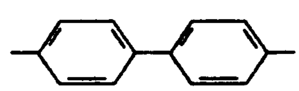 ,

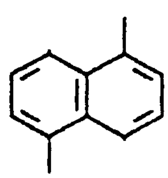 oder 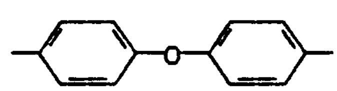

ersetzt ist, bei denen bevorzugt $Ar^1$ durch $Ar^3$ mit der Bedeutung

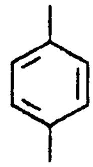 oder 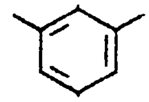

ersetzt ist.

3. Membranen nach Anspruch 1, bei denen $X^1$ durch $X^2$ mit der Bedeutung

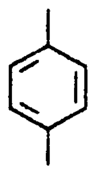 , 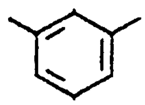 , 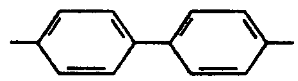 ,

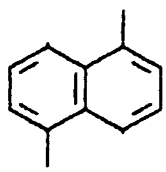 oder 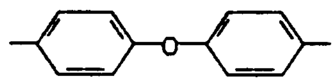

ersetzt ist, bei denen bevorzugt $X^1$ durch $X^3$ mit der Bedeutung

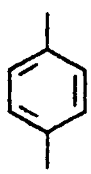 oder 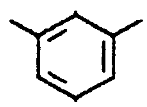

ersetzt ist.

4. Membranen nach Anspruch 1, bei denen $R^1$ durch $R^2$ mit der Bedeutung Wasserstoff, geradkettiges oder verzweigtes $C_1$-$C_4$-Alkyl, Cyclopropyl, Cyclopentyl, Cyclohexyl, Phenyl oder Benzyl ersetzt ist, bei denen bevorzugt $R^1$ durch $R^3$ mit der Bedeutung Wasserstoff, Methyl, Ethyl oder Benzyl ersetzt ist.

5. Membranen nach Anspruch 1, bei denen n ein Zahlenmittel des Polymerisationsgrades von 25 bis 250 bedeutet.

6. Membranen nach Anspruch 1, gekennzeichnet durch einen asymmetrischen Aufbau.

7. Verfahren zur Herstellung von Membranen nach Anspruch 1, dadurch gekennzeichnet, daß die Lösung des in Anspruch 1 beschriebenen aromatisch-heterocyclischen Polyamids in einem aprotischen, polaren Lösungsmittel auf einer ebenmäßigen Unterlage zu einem Film ausgebreitet wird oder zu Hohlfäden, Schläuchen oder Kapillaren verarbeitet wird und dann das Lösungsmittel diesem Film bzw. dem Hohlfaden, Schlauch oder der Kapillare mit Hilfe eines Hilfslösungsmittels, das mit dem aprotischen, polaren Lösungsmittel mischbar ist, aber kein Lösungsmittel für das Polyamid darstellt, entzogen wird.

8. Verfahren nach Anspruch 7, dadurch gekennzeichnet, daß das aprotische, polare Lösungsmittel N-Methylpyrrolidon (NMP), Dimethylformamid (DMF), Dimethylacetamid (DMAC), Dimethylsulfoxid (DMSO) oder ein Gemisch mehrerer von ihnen ist.

**9.** Verwendung von Membranen nach Anspruch 1 für die Hämodialyse, Hämodiafiltration bzw. Ultrafiltration.